(19) Europäisches Patentamt
European Patent Office
Office européen des brevets

(11) Publication number: **0 335 619 A2**

(12) **EUROPEAN PATENT APPLICATION**

(21) Application number: 89302967.8

(22) Date of filing: 23.03.89

(51) Int. Cl.[4]: **B29C 33/60 , B29C 33/62 , C08K 5/09 , //B29K75:00**

(30) Priority: 14.06.88 GB 8814024
31.03.88 GB 8807684

(43) Date of publication of application:
04.10.89 Bulletin 89/40

(84) Designated Contracting States:
AT BE CH DE ES FR GB IT LI NL SE

(71) Applicant: IMPERIAL CHEMICAL INDUSTRIES PLC
Imperial Chemical House Millbank
London SW1P 3JF(GB)

(72) Inventor: Cassidy, Edward Francis
Rue Jozef Vanderlinden 28
B-1180 Brussels(BE)
Inventor: Gillis, Herbert Russell
Unit 4 8230 Crestview Drive
Sterling Heights Michigan 48077(US)
Inventor: Hannaby, Malcolm
Mechelsestraat 155 bus 14
B-3000 Leuven(BE)
Inventor: Parfondry, Alain
Avenue Jules Bordet 66/12
B-1140 Evere(BE)

(74) Representative: Leherte, Georges Maurice Lucien Marie et al
Imperial Chemical Industries PLC Legal Department: Patents P.O. Box 6
Welwyn Garden City Herts. AL7 1HD(GB)

(54) **Internal mould release compositions.**

(57) An internal mould release composition, suitable for use in the production of moulded articles by the RIM process comprising :

a) a metal salt of an organic acid, said metal salt having mould release properties, and

b) a polymer having a molecular weight of at least 1500 containing at least two guanidine or isourea groups of the formula :

$$-A-\underset{\displaystyle NQ^2Q^3}{\underset{|}{C}}=NQ^4 \qquad (1)$$

wherein A represents

EP 0 335 619 A2

$-O-$ or 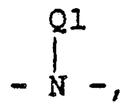

and wherein each of $Q^1$ and $Q^2$, independently, represents hydrogen, alkyl or cycloalkyl and each of $Q^3$ and $Q^4$, independently, represents hydrogen, alkyl, cycloalkyl, arakyl or aryl.

# Internal mould release compositions.

This invention relates to internal mould release compositions and to their use in the production of moulded articles by the reaction injection moulding process from reaction mixtures containing organic polyisocyanates and isocyanate-reactive components.

The production of moulded articles, for example automotive body parts, from organic polyisocyanates and isocyanate-reactive components by the reaction injection moulding (RIM) process is well established. In the process, two highly reactive liquid streams, one containing a polyisocyanate and the other containing isocyanate-reactive components, for example polyol and/or polyamine reactants, are impingement mixed and rapidly injected into a mould cavity. By this method, high production rates of moulded polyurethane, polyurea and related polymeric articles having excellent physical properties can be achieved.

Whilst the RIM process is eminently suited to the mass production of isocyanate-based moulded articles, it is essential to its successful and economic operation that the moulded product can be easily removed from the mould without being damaged. One method of facilitating demoulding is to coat the internal surfaces of the mould with a mould release agent, for example a wax or soap. This procedure has the disadvantage that application of the release agent has to be repeated almost every time the mould is used, adding substantially to the time and cost of the process.

In order to overcome the problems associated with external mould release agents, it has been proposed to use release agents of the internal type pre-blended with either the polyisocyanate or the isocyanate-reactive component. One type of internal release agent which has been successfully used in the production of other moulded plastics articles comprises metal carboxylates such as zinc stearate. Unfortunately, such salts are soluble in neither the polyisocyanate nor the usual isocyanate-reactive components. It has been proposed, therefore, to use the metal salts in conjunction with certain materials which have the effect of compatibilising the salts with the isocyanate-reactive compounds. Thus, for example, it has been proposed in European Patent Publications 119471, 173888 and 190317 to employ various amino compounds as compatibilisers

It has now been found out that isocyanate-reactive polymers having terminal guanidine groups or isourea groups behave quite differently from the isocyanate-reactive compounds conventionally used in the manufacture of moulded polyurethane, polyurea and like polymers by processes such as the RIM process in their ability to form stable compositions, for example compositions with the aforesaid metal salts. These stable compositions may be used as replacements for conventional isocyanate-reactive polymers or, alternatively, they may be used to incorporate the metal salts into conventional isocyanate-reactive compounds, the guanidine-terminated polymer or isourea-terminated polymer acting as a compatibilising agent. Said compatibilising agents provide improved stability and better control over reactivity.

The term "compatibiliser" as used herein refers to the formation of solutions, dispersions and/or suspensions of said metal carboxylate salt(s) in the isocyanate reactive component of the reaction injection moulding systems (as described herein), so that said metal carboxylates are rendered effective as internal mould release agents, under the conditions of processing employed.
The compatibilising agents described herein also facilitate the manufacture, and storage-stability, of said isocyanate reactive components containing internal mould release agents of the metal carboxylate type.

Accordingly, the invention provides an internal mould release composition comprising :

(a) a metal salt of an organic acid, said metal salt having mould release properties, and

(b) a polymer having a molecular weight of at least 1500 containing at least two groups of the formula :

$$-A-\underset{NQ^2Q^3}{\underset{|}{C}}=NQ^4 \qquad (1)$$

wherein A represents

$$-O- \quad \text{or} \quad -\overset{Q1}{\overset{|}{N}}-,$$

and wherein each of $Q^1$ and $Q^2$, independently, represents hydrogen or alkyl and each of $Q^3$ and $Q^4$, independently, represents hydrogen, alkyl, cycloalkyl, aralkyl or aryl.

Alkyl radicals which may be present in the groups of Formula 1 include straight chain or branched radicals having from 1 to 10 carbon atoms. Typical cycloalkyl radicals have from 5 to 7 carbon atoms, for example cyclohexyl. Aralkyl radicals include benzyl and phenylethyl and aryl radicals include phenyl and substituted phenyl.

The metal salts present in the compositions of the invention may be any metal salts which are derived from organic acids and which have mould release properties. Such salts have been fully described in the prior art relating to the moulding of polyurethanes, polyureas and other resins.

The organic acids from which the salts may be derived particularly include carboxylic acids containing from 8 to 24 carbon atoms. Such acids may be aromatic or cyclo aliphatic but are preferably aliphatic monocarboxylic acids which may be straight-chain or branched, saturated or unsaturated and may carry substituents such as hydroxy, amino or amido groups. The most preferred aliphatic monocarboxylic acids are the so-called "fatty acids" having from 10 to 18 carbon atoms, for example lauric, palmitic, stearic, isostearic, oleic, linoleic and ricinoleic acids and mixtures of any of these.

The metal salts may be salts of any metal of Groups Ia, Ib, IIa and IIb of the Periodic Table or of other metals such as chromium, molybdenum, iron, cobalt, nickel, aluminium, tin, lead, antimony or bismuth. The preferred metals are lithium, magnesium, calcium, barium, iron, cobalt, nickel, copper, zinc, cadmium and aluminium and mixtures thereof.

As examples of particularly suitable salts there may be mentioned zinc stearate, zinc oleate, zinc palmitate, zinc laurate, zinc octoate, zinc behenate, zinc ricinoleate and the calcium, magnesium, nickel and copper salts of lauric, palmitic, stearic and oleic acids. The most preferred salt is zinc stearate.

The polymer present in the compositions of the invention typically has a molecular weight in the range from 1500 to 12000, especially from 2000 to 8000. Preferred polymers contain from 2 to 4 groups of Formula 1, especially 2 or 3 such groups.

Polymers containing a plurality of groups of Formula 1 may conveniently be prepared by reacting a polymer containing a plurality of primary or secondary amino terminal groups or primary or secondary hydroxyl terminal groups and having a molecular weight of at least 1500 with a carbodiimide. Amine-terminated polymers suitable as starting materials include polyether polyamines, especially polyoxypropylene diamines and triamines such as Jeffamine D-2000 and Jeffamine T-3000. Hydroxyl-terminated polymers suitable as starting materials include polyether polyols especially polyoxypropylene diols and triols.

Carbodiimides useful as starting materials include N,N′-dicyclohexylcarbodiimide, dimethylcarbodiimide, diphenylcarbodiimide.

The compositions of the invention typically contain from 0,1 to 15 %, preferably from 2 to about 10 % and most preferably from 2 to 5 %, of metal salt on a weight basis.

The compositions may be conveniently prepared by agitating one or more metal salts as hereinbefore defined with one or more polymers having a molecular weight of at least 1500 and containing two or more groups of Formula 1 at ambient or elevated temperatures until a clear solution or stable colloidal suspension is obtained. In some cases, stirring for several hours at temperatures of up to 80 °C or even higher may be necessary.

As indicated above, the internal mould release compositions of the invention are useful in the production of moulded articles by a process comprising reacting in a suitable mould a polyisocyanate composition with an isocyanate-reactive composition comprising one or more compounds containing a plurality of isocyanate-reactive groups in the presence of said mould release composition.

In order to facilitate the incorporation of the internal mould release composition of the invention into the reaction mixture used in the moulding process, it is usually desirable to pre-blend said composition with one or more other isocyanate-reactive components of the reaction mixture.

Accordingly, in another aspect of the invention, there is provided an isocyanate-reactive composition comprising at least one compound having a plurality of isocyanate-reactive groups having dissolved or dispersed therein an effective amount of an internal mould release composition comprising :

(a) a metal salt of an organic acid, said metal salt having mould release properties, and

(b) a compatibilising amount of a polymer having a molecular weight of at least 1500 containing at least two groups of Formula 1, the metal salt being incompatible with the compound having a plurality of isocyanate-reactive groups in the absence of the compatibiliser.

The expression "an effective amount" used herein means an amount of the mould release composition

of the invention sufficient to provide acceptable mould release when the isocyanate-reactive composition is used in a moulding process. Where the isocyanate-reactive composition contains more than one isocyanate-reactive compound, the requirement of incompatibility with the metal salt means that the metal salt is incompatible with at least one of the isocyanate-reactive compounds present in the composition.

The expression "a compatibilising amount" used herein means an amount of the polymer containing groups of formula 1 sufficient to provide a substantially stable solution or dispersion of mould release composition in the isocyanate-reactive compound or compounds. Clearly, this amount will vary depending on the nature of the metal salt, the nature of the isocyanate-reactive compound and their relative proportions as well as on the nature of the compatibiliser.

Compounds containing a plurality of isocyanate-reactive groups which may be present in the isocyanate-reactive compositions of the invention include compounds having molecular weights of from about 60 to about 12000, containing an average of two or more isocyanate-reactive groups per molecule. Examples of isocyanate-reactive groups which may be present in these compounds include hydroxyl, thiol, primary amino, secondary amino, enamine containing, imino-functional and mixtures of such groups.

Particularly important isocyanate-reactive compositions for use in RIM processes contain a combination of a relatively high molecular weight polymer containing a plurality of isocyanate-reactive groups and a relatively low molecular weight compound containing a plurality of isocyanate-reactive groups, usually known as a chain extender.

Thus, in a further aspect of the invention, there is provided an isocyanate-reactive composition comprising :

(i) at least one polymer containing a plurality of isocyanate-reactive groups and having a number average molecular weight of from 1500 to about 12000;

(ii) at least one chain extender having a molecular weight less than 1500, and

(iii) an effective amount of an internal mould release composition comprising :

(a) a metal salt of an organic acid, said metal salt having mould release properties, and

(b) a compatibilising amount of a polymer having a molecular weight of at least 1500 containing at least two groups of Formula 1, the metal salt being incompatible with the combination of (i) and (ii) in the absence of the compatibiliser.

Polymers containing a plurality of isocyanate-reactive groups which may be present in the isocyanate-reactive compositions of the invention include polyols, polyamines, imino-functional polymers, enamine containing polymers and mixtures thereof. Since the groups of Formula 1 are isocyanate-reactive groups, it is within the scope of the invention to use the mould release compositions of the invention as isocyanate-reactive compositions without incorporating a further isocyanate-reactive polymer but with the optional addition of a chain extender.

Polymeric polyols having molecular weights in the range from 1500 to about 12000 are well known as polyurethane components and may be prepared by methods fully described in the prior art. As examples of suitable polyols there may be mentioned polythioethers, polyesters, polyesteramides, polycarbonates, polyacetals, polyolefins, polysiloxanes and, especially, polyethers.

Polyether polyols which may be used include products obtained by the polymerisation of a cyclic oxide, for example ethylene oxide, propylene oxide or tetrahydrofuran in the presence, where necessary, of polyfunctional initiators. Suitable initiator compounds contain a plurality of active hydrogen atoms and include water, polyols, for example ethylene glycol, propylene glycol, diethylene glycol, resorcinol, bisphenol A, glycerol, trimethylolpropane, 1,2,6-hexanetriol, triethanolamine, pentaerythritol, sorbitol or sucrose, ammonia, primary monoamines, for example aniline or benzylamine, polyamines, for example ethylene diamine, hexamethylene diamine, toluene diamines, diaminodiphenylmethanes and polymethylene polyphenylene polyamines obtained by the condensation of aniline and formaldehyde, and aminoalcohols, for example ethanolamine and diethanolamine. Mixtures of initiators and/or cyclic oxides may be used.

Especially useful polyether polyols include polyoxypropylene and poly(oxyethylene-oxypropylene) diols and triols obtained by the simultaneous or sequential addition of ethylene and propylene oxides to appropriate di- or trifunctional initiators as fully described in the prior art. Mixtures of the said diols and triols are often particularly useful.

Because of their enhanced reactivity, ethylene oxide tipped polyols are often preferred.

Polyester polyols which may be used include hydroxyl terminated reaction products of polyhydric alcohols such as ethylene glycol, propylene glycol, diethylene glycol, 1,4-butanediol, bis(hydroxyethyl) terephthalate, glycerol, trimethylolpropane or penaerythritol or mixtures thereof with polycarboxylic acids, especially dicarboxylic acids or their ester-forming derivatives, for example succinic, glutaric and adipic

acids or their dimethyl esters, sebacic acid, phthalic anhydride, tetrachlorophthalic anhydride or dimethyl terephthalate. Polyesters obtained by the polymerisation of lactones for example caprolactone, in conjunction with a polyol, may also be used. Polyesteramides may be obtained by the inclusion of aminoalcohols such as ethanolamine in polyesterification mixtures.

Polythioether polyols which may be used include products obtained by condensing thiodiglycol either alone or with other glycols, dicarboxylic acids, formaldehyde, aminoalcohols or aminocarboxylic acids.

Polycarbonate polyols which may be used include products obtained by reacting diols such as 1,3-propanediol, 1,4-butanediol, 1,6-hexanediol, diethylene glycol or tetraethylene glycol with diaryl carbonates, for example diphenyl carbonate, or with phosgene.

Polyacetal polyols which may be used include those prepared by reacting glycols such as diethylene glycol, triethylene glycol or hexanediol with formaldehyde. Suitable polyacetals may also be prepared by polymerising cyclic acetals.

Suitable polyolefin polyols include hydroxy-terminated homo-and copolymers and suitable polysiloxane polyols include polydimethylsiloxane diols and triols.

Polymeric polyamines having molecular weights in the range from 1500 to about 12000 are well known as components of polyurea forming reaction mixtures and may be prepared by methods fully described in the prior art. As examples of suitable polyamines, there may be mentioned amino-terminated polythioethers, polyesters, polyesteramides, polycarbonates, polyacetals, polyolefins, polysiloxane and, especially, polyethers obtained by replacing the hydroxy groups of the corresponding polyols partially or completely by secondary or preferably primary amino groups. The preferred polymeric polyamines are polyether diamines and triamines, especially polyoxypropylene diamines and triamines.

Imino-functional polymers having molecular weights in the range from 1500 to about 12000 have been described in US Patent No. 4,794,129 together with methods for their preparation.

The preferred imino-functional polymers are imine-terminated polyethers such as may be obtained for example by reacting an aldehyde or ketone with a polyether polyamine, especially a polyoxypropylene diamine or triamine.

Enamine functional polymers may be prepared either from secondary amine terminated resins (i.e. polyethers) by reaction with ketones/aldehydes having one or more alpha hydrogens, or by reacting ketone/aldehyde terminated resins (bearing alpha hydrogens) with secondary amines, providing for removal of the $H_2O$ formed in the reactions. Secondary amine terminated resins can be obtained, for example by catalytic hydrogenation of the imino-functional polymers described hereinabove. Ketone/aldehyde terminated resins may be obtained, in general, by oxidation of the corresponding secondary or primary hydroxyl terminated resin. More highly reactive enamine functional polymers can be prepared by oxidizing a primary hydroxy functional resin to the corresponding polycarboxylic acid, conversion of the said groups to orthoesters, and treatment of the latter, with an excess of a secondary amine. Each orthoester must contain at least one alpha hydrogen atom.

Polymers containing a plurality of isocyanate-reactive groups for inclusion in the isocyanate-reactive compositions of the invention preferably have molecular weights in the range from 2000 to 8000 and have isocyanate-reactive functionalities of from 2 to 6, especially 2 or 3.

Chain extenders having molecular weights below 1500 which may be present in the isocyanate-reactive compositions of the invention have been fully described in the prior art and include polyols and polyamines, especially diols and diamines. Mixtures of different chain extenders may be used if desired. Preferred chain extenders have molecular weights below 800 and often below 500.

Polyols which may be used as chain extenders include ethylene glycol and 1,4-butanediol.

Polyamines which may be used as chain extenders include aliphatic polyamines, especially diamines, and aromatic polyamines, especially sterically hindered diamines.

Ethylene diamine and low molecular weight polyether diamines are examples of suitable aliphatic polyamines whilst suitable aromatic diamines include 3,5-diethyl-2,4-toluene diamine, 3,5-diethyl-2,6-toluene diamine, and mixtures thereof (referred to as DETDA), 1,3,5-triethyl-2,6-diaminobenzene, 4,4′- and 2,4′-diaminodiphenylmethanes and mixtures thereof, 2,4- and 2,6-diaminotoluenes and mixtures thereof, 1,3,5-triisopropyl-2,4-diaminobenzene, 3,3′,5,5′-tetraisopropyl-4,4′-diaminodiphenylmethane and the like.

Imino-functional compounds which may be used as chain extenders include compounds having molecular weights below 1500 described in US Patent No. 4,794,129. Examples of preferred compounds include aliphatic polyethers terminated with aliphatic imine groups which can be made in facile manner by reacting commercially available low molecular weight polyether polyamines, especially diamines, with aldehydes or ketones to form, respectively, the corresponding aldimines or ketimines. Other examples include simple bis-ketimines or bis-aldimines of 1,6-hexamethylene diamine, isophorone diamine, menthane diamine and the like and bis-oxazolines, bis-thiazolines or bis-imidazolines derived from adiponitrile, adipic

acid and the like.

Enamines having molecular weights below 1500 may also be used as chain extenders.

The relative proportions of isocyanate-reactive polymer and chain extender present in the isocyanate-reactive compositions of the invention generally conform to the teachings of the prior art. The concentration of internal mould release composition in the isocyanate-reactive composition is typically such that the latter contains from 0,1 to 15 % preferably from 2 to 10 and most preferably from 2 to 5 % by weight of metal salt.

The moulding process comprises reacting a polyisocyanate composition with an isocyanate-reactive composition of the invention in a suitable mould.

Accordingly, in a still further aspect of the invention, there is provided a reaction system for use in making a moulded article, said system comprising the following components :

(1) a polyisocyanate composition, and

(2) an isocyanate-reactive composition comprising at least one compound having a plurality of isocyanate-reactive groups having dissolved or dispersed therein an effective amount of an internal mould release composition comprising :

(a) a metal salt of an organic acid, said metal salt having mould release properties, and

(b) a compatibilising amount of a polymer having a molecular weight of at least 1500 containing at least two groups of Formula 1, the metal salt being incompatible with the compound having a plurality of isocyanate-reactive groups in the absence of the compatibiliser, under the conditions employed for preparation and processing of the isocyanate reactive composition.

The invention also provides a reaction system for use in making a reaction injection moulded article, said system comprising the following components :

(1) a polyisocyanate composition, and

(2) an isocyanate-reactive composition comprising :

(i) at least one polymer containing a plurality of isocyanate-reactive groups and having a number average molecular weight of from 1500 to about 12000;

(ii) at least one chain extender having a molecular weight less than 1500, and

(iii) an effective amount of an internal mould release composition comprising :

(a) a metal salt of an organic acid, said metal salt having mould release properties, and (b) a compatibilising amount of a polymer having a molecular weight of at least 1500 containing at least two groups of Formula 1,

the metal salt being incompatible with the combination of (i) and (ii) in the absence of the compatibiliser, under the conditions employed for preparation and processing of the isocyanate reactive composition.

Polyisocyanate compositions which may be reacted with the isocyanate-reactive compositions of the invention in the moulding process may include any of the aliphatic, cycloaliphatic, araliphatic or aromatic polyisocyanates known in polyurethane or polyurea chemistry, especially those that are liquid at room temperature.

Examples of suitable polyisocyanates include ethylene diisocyanate, 1,6-hexamethylene diisocyanate, isophorone diisocyanate, cyclohexane-1,4-diisocyanate, 4,4′-dicyclohexylmethane diisocyanate, 1,4-xylylene diisocyanate, 1,4-phenylene diisocyanate, 2,4-toluene diisocyanate, 2,6-toluene diisocyanate, 4,4′-diphenylmethane diisocyanate, 2,4′-diphenylmethane diisocyanate, polymethylene polyphenylene polyisocyanates (crude MDI) and 1,5-naphthylene diisocyanate. Mixtures of polyisocyanates can be used and also polyisocyanates which have been modified by the introduction of urethane, allophanate, urea, biuret, carbodiimide, uretonimine or isocyanurate residues.

In general, the aromatic polyisocyanates are preferred, especially the available MDI isomers, that is to say 4,4′-diphenylmethane diisocyanate, 2,4′-diphenylmethane diisocyanate and mixtures thereof. MDI variants such as uretonimine-modified MDI and MDI prepolymers are also of great value in the moulding process.

Particularly useful polyisocyanate compositions comprise a reaction product of a stoichiometric excess of an organic polyisocyanate, especially MDI, and, i) a polymeric polyol having an average hydroxyl functionality of about 2 to 4 and an average hydroxyl equivalent weight of from 800 to 2000, and

ii) a polymeric polyamine having an average primary and/or secondary amino functionality of from about 2 to about 3 and an average amine equivalent weight of from about 800 to about 2000.

The reaction systems of the invention may also contain other conventional ingredients of such systems, said ingredients usually being present in the isocyanate-reactive compositions of the invention. Such ingredients include catalysts, for example tin compounds and tertiary amines, surface-active agents and foam stabilisers, for example siloxane-oxyalkylene copolymers, blowing agents, for example water and low boiling halogenated hydrocarbons, flame retardants, plasticisers, dyes, fillers and reinforcing agents.

In the moulding process, the techniques and equipment used may be those that have been fully described in the prior art. RIM processes which may be used include structural RIM, amine RIM processes, and "spray"-RIM mouldings.

The invention is illustrated but not limited by the following Examples:

Example 1

a) An internal mould release composition suitable for use in RIM systems was prepared by stirring 2.5 g of zinc stearate and 60 g of a guanidine-terminated polyether for 4 hours at room temperature.
The resulting solution was clear and stable.

b) The guanidine-terminated polyether was prepared by reacting 7500 g (1.5 moles) of Jeffamine T-5000, 770.6 g (3.74 moles) of N,N′-dicyclohexylcarbodiimide and 7.5 g of copper (I) chloride (as catalyst), in a ten liter reactor at 130° C for 17.5 hours.

The reactor had been fitted with a mechanical stirrer, nitrogen sparge, and a temperature control thermocouple. The temperature was set to 130° C. The progress of the reaction was monitored by IR analysis by means of the reduction of a peak at 2130 $cm^{-1}$ which indicated the consumption of DCC and the growth of a peak at 1640 $cm^{-1}$ which indicated formation of the guanidine end groups. An IR spectrum taken after 1120 minutes showed that reaction was essentially complete so the product was cooled and discharged.

Example 2

a) An internal mould release composition suitable for RIM systems was prepared by stirring 2.5 g of zinc stearate and 60 g of an isourea terminated polyether.
The resulting solution was clear and stable.

b) The isourea-terminated polyether was obtained by reacting 5000 g of PPG 2000 (2.5 moles), 1289.0 g of N,N′-dicyclohexylcarbodiimide (6.25 moles) and 12.5 g of Cu(I)Cl as catalyst. The reactants were charged to a ten liter reactor which had been fitted with a mechanical stirrer, nitrogen sparge, and temperature control thermocouple. The temperature was set to 130° C. The progress of the reaction was monitored by IR analysis by means of the reduction of a broad OH band at 3500 $cm^{-1}$ which indicated the consumption of PPG 2000, the reduction of a peak at 2130 $cm^{-1}$ which indicated the consumption of DCC, and the growth of a peak at 1660 $cm^{-1}$ which indicated formation of isourea end groups. An IR spectrum taken after 110 minutes indicated that the reaction had started. After 1210 minutes another gram of catalyst was added since an IR spectrum indicated that the rate of reaction had slowed greatly. After 1475 minutes an IR spectrum showed no further reduction in the OH peak so the reaction was considered complete and the heat was turned off after 1490 minutes.

Example 3

An isocyanate-terminated prepolymer was formed by sequentially adding 26.54 parts by weight of a polyoxyethylene capped polyoxypropylene triol (having a hydroxyl number of 32) and 25.38 parts by weight of Jeffamine D-2000 (amine ended polyether from Texaco) to 49.94 parts by weight of pure 4,4′-MDI modified with ca. 20% 2,4 isomer. The prepolymer, which had an isocyanate content of 13.4% (by wt.) was employed as the "A" component and reacted with a "B" component having the following composition :

| | |
|---|---|
| Guanidine terminated polyether (prepared according to example 1b) | 60 pwb |
| DETDA | 40 pwb |
| $ZnSt_2$ | 2.5 pwb |

The formulation was processed on a Battenfeld SHK-65 RIM machine wherein the "A" component was maintained at 40 °C and the "B" component was maintained at 40 °C. The weight ratio of the "A" component to the "B" component was 1.58. The isocyanate index was 105. The two streams were impingement mixed and injected into a mold which had been preheated to 90 °C-100 °C. The dimensions of the mold were 30 cm x 30 cm x 3 mm (thickness), and was a square test plaque mold. It was observed that this formulation showed self-release properties. A large number of consecutive plaque demoldings were allowed with this formulation when processed using a mold pretreated with a single application of a standard wax and soap (chem Trend XMR 2003, XMR 2006) external mold release agent combination.

## Claims

1. An internal mould release composition comprising :
(a) a metal salt of an organic acid, said metal salt having mould release properties, and
(b) a polymer having a molecular weight of at least 1500 containing at least two guanidine or isourea groups of the formula :

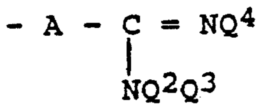

(1)

wherein A represents

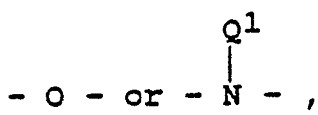

and wherein each of $Q^1$ and $Q^2$, independently, represents hydrogen, alkyl or cycloalkyl and each of $Q^3$ and $Q^4$, independently, represents hydrogen, alkyl, cycloalkyl, aralkyl or aryl.
containing from 10 to 18 carbon atoms.

2. A composition according to claim 1 wherein the salt of an organic acid is zinc stearate.

3. A composition according to any preceding claims wherein the polymer containing groups of formula 1 has a molecular weight in the range 1500 to 12000.

4. A composition according to any preceding claim wherein the polymer contains from 2 to 4 groups of formula 1.

5. A composition according to any preceding claim wherein the polymer containing guanidine groups is a reaction product of a polyether polyamine and a carbodiimide.

6. A composition according to any preceding claim 11 wherein the polymer containing isourea groups is a reaction product of a polyether or polyester polyol and a carbodiimide.

7. An isocyanate-reactive composition comprising at least one compound having a plurality of isocyanate-reactive groups having dissolved or dispersed therein an effective amount of internal mould release composition according to any preceding claim, the metal salt in the mould release composition being incompatible with the compound having a plurality of isocyanate-reactive groups in the absence of the polymer containing groups of formula 1, under the conditions of preparation and processing employed for said isocyanate reactive composition.

8. An isocyanate-reactive composition according to claim containing :
(i) at least one polymer containing a plurality of isocyanate-reactive groups and having a number average molecular weight of from 1500 to about 12000, and
(ii) at least one chain extender having a molecular weight less than 1500,

the metal salt in the mould release composition being incompatible with the combination of (i) and (ii), under the conditions of preparation and processing used for said composition, in the absence of the polymer containing groups of formula 1.

9. An isocyanate-reactive composition according to claim 8 wherein the chain extender comprises an aromatic diamine.

10. A reaction system for use in making a moulded article, said system comprising :

(1) a polyisocyanate composition, and

(2) an isocyanate-reactive composition according to any of claims 7 to 9.

11. A reaction system according to claim 10 wherein the polyisocyanate composition comprises at least one diphenylmethane diisocyanate isomer and/or an MDI variant.

12. A moulded article obtained from a reaction system according to any of claims 10 and 11.